Europäisches Patentamt

European Patent Office

Office européen des brevets

(19)

(11) Publication number: **0 010 349**
**A1**

(12) **EUROPEAN PATENT APPLICATION**

(21) Application number: **79301798.9**

(22) Date of filing: **31.08.79**

(51) Int. Cl.³: **G 05 D 7/01**
**B 60 T 17/04, F 16 K 15/02**

(30) Priority: **09.09.78 GB 3628378**
**12.07.79 GB 7924437**

(43) Date of publication of application:
**30.04.80 Bulletin 80/9**

(84) Designated Contracting States:
**DE FR IT NL SE**

(71) Applicant: **BENDIX WESTINGHOUSE LIMITED**
**Douglas Road**
**Kingswood, Bristol BS15 2NL(GB)**

(72) Inventor: **Christmas, Michael Charles**
**Bendix Westinghouse Limited Douglas Road**
**Kingswood, Bristol(GB)**

(72) Inventor: **Gibbons, Peter Frederick**
**Bendix Westinghouse Limited Douglas Road**
**Kingswood, Bristol(GB)**

(74) Representative: **Turner, Alan Reginald**
**Westinghouse Brake And Signal Company Limited**
**Chippenham, Wiltshire, SN15 1JD(GB)**

(54) Pressure responsive governor device.

(57) A fluid pressure responsive governor device (1) for governing the operation of a compressor or a compressor unloader has a spring-biassed valve device (13,14) controlling connection of an output port (3) to an input port (2) or to atmosphere according to the valve of a controlling reservoir pressure at the input port, the valve arrangement being positively held in the former condition by virtue of enhanced area exposed to the controlling pressure and the valve arrangement being provided by a seal (13) which is sealingly slideable in a tubular opening (14) so as to be able to execute movement due to predetermining pressure changes without resulting in switching over to the other condition.

BAD ORIGINAL

./...

COMPLETE DOCUMENT

Fig. 1

This invention relates to fluid pressure responsive governor devices and relates especially to such governor devices for controlling the unloading of air compressors such as may be employed for maintaining reservoirs of a fluid pressure vehicle braking system in a charged condition.

Fluid pressure responsive governor devices have already been proposed which include a valve arrangement which up to a predetermined pressure maintain closed a fluid pressure passage between a pressure input port and a pressure output port and at the same time provide a vent path for the output port so that no pressure signal appears thereat under these conditions. On attainment of the predetermined pressure, however, the valve arrangement unseats to present an increased area to the pressure at the input port thereby effecting a snap action accompanied by opening of the communication between the input and output port and closure of the vent path.

Such valves as have hitherto been proposed have suffered certain shortcomings in that in order to provide stability of operation, the governor has had to be designed such that the predetermined pressure is appreciably higher than the pressure at which the governor returns to its starting condition.

According to the present invention, a fluid pressure responsive governor device is proposed which includes a body having a fluid pressure input signal port and a fluid pressure output signal port, spring-loaded valve means responsive to attainment of a predetermined pressure at the input port to move to a condition in which it opens a connection between the input port and the output port and closes an output port vent valve, said member thereafter being positively held in said condition by virtue of an increase of effective area exposed to said input port pressure characterised in that means are provided whereby the spring-loaded means is able to execute movement due to a pressure change whilst nevertheless maintaining closure of the vent valve.

Preferably the said means is provided by said valve having a tubular seat part and a closure part which is such as to effect a plugging action in the aperture of said tubular part.

By virtue of the invention it is found that a governor device can be provided which, whilst remaining stable, enables a reduced pressure differential between the said predetermined pressure and the lower pressure at which the device subsequently resets.

In order that the present invention may be more clearly understood and readily carried into effect, the same will be further described by way of example, with reference to the accompanying drawings of which

Fig. 1, illustrates in sectional view one form of governor device employing the invention and

Fig. 2, illustrates a similar governor device included in a compressor unloader arrangement.

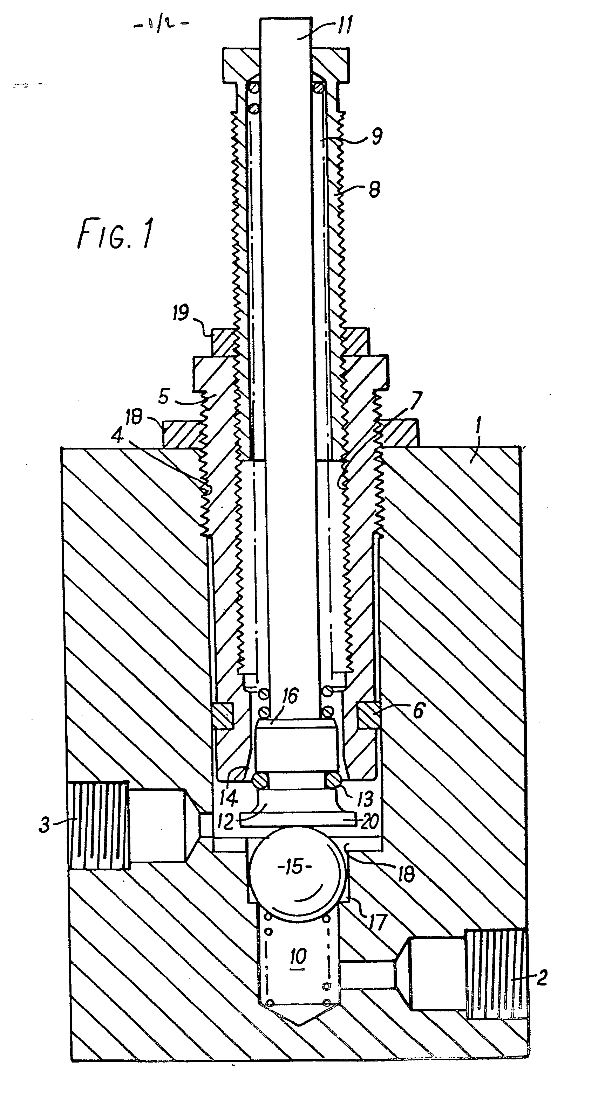

The pressure-responsive governor device of Fig. 1 has a main body 1, having an input port 2 and an output port 3. The body 1 has a partially screw-threaded bore 4 within which a valve seat part 5 is screwed. The seat part 5 is itself tubular and the lower skirt thereof is provided with an O-ring 6 in an external annular groove to provide a fluid pressure-tight seal between the region beneath the part 5 and the exterior of the device. The central bore 7 of the part 5 is itself partially threaded to accept a screw-adjustable tubular part 8 which retains a spring 9, the lower end of which abuts a shoulder 16 of a member having an upwardly extending stem 11 and a downwardly extending vent valve part 12 carrying an O-seal 13 and a head 20. On upward deflection of the part 12 against the thrust of the spring 9, the O-seal 13 is able to enter an inwardly tapered aperture 14 and be sealingly slidable against the internal bore of the other valve part 5 until stopped by abutment of head 20 with the lower end of 5. In the position shown, the seal 13 is shown in its downward deflected position wherein it enables venting communication to exist between the output port 3 and atmosphere via the tubular part 8. Beneath the downwardly extending portion 12 of the valve member, there is a further valve member in the form of a ball 15 which is upwardly urged by a light spring 10 but in the lowermost position shown, the ball 15 provides a seal against a valve seat 17 the diameter of which is appreciably less than the full diameter of the ball 15. Furthermore, the full diameter of the ball is contained with a sliding fit in a cylindrical portion 18 of the main body.

In the arrangement shown, the upwardly extending stem 11 passes out through the upper end of the part 8 and can provide manual access for testing purposes.

Alternatively, the part 8 may merely be provided with a vent aperture and the upwardly extending stem 11 may merely be contained entirely within the part 8 being guided by the spring 9.

In operation of the governor device, it will be assumed in the present example that the device is employed in conjunction with a compressor for maintaining a desired fluid pressure in one or more reservoirs of a vehicle air braking system. In the case of there being more than one reservoir charged by the compressor, these reservoirs would normally be charged via suitable pressure protection valves but assuming, in the present example that only a single reservoir is concerned, the input port 2 would be connected to the reservoir itself and the output port 3 would be connected to a device of any suitable known form for unloading the compressor. Control of the compressor entails applying a control pressure to the compressor to render it inoperative in known manner to supply compressed air.

Assuming that the pressure in the reservoir commences at a pressure which is at atmosphere or appreciably below the desired level of pressure, the compressor

0010349

operates to feed compressed air to the reservoir until the point is reached at which, due to the reservoir pressure acting beneath the ball 15 on an area equivalent to the circular area of the seat 17, the ball 15 lifts from its seat against the thrust of the spring 9. Immediately the ball 15 unseats from the seat 17, it presents substantially the full diameter of the ball to the pressure in the input port 2 and this results in a snap-action effect to urge the valve assembly carrying the seal 13 into the aperture 14 thereby closing-off the communication between the output port 3 and atmosphere. At this point, substantial equilibrium will have been reached with regards to the pressure actually acting above and below the ball 15, but by virtue of the fact that the diameter of the seal 13 when sealing with the aperture 14, is slightly greater than the diameter of the seat 17, the pressure existing in the reservoir is sufficient to maintain the assembly in the upward deflected condition and this condition is stable regardless of slight vibrations or slight pressure fluctuations by virtue of the fact that the seal 13 is able to move within the aperture 14 without creating a leakage from the output port to atmosphere. This is distinct from prior arrangements wherein a slight movement of a valve member operative to close-off the vent passage between an output port and atmosphere gives rise to a leakage and resulting instability.

0010349

The predetermined fully charged pressure of the reservoir at which the valve assembly 15, 11, 12 is deflected upwards to produce an output signal at the port 3 to render the compressor inoperative is adjustable by adjustment of the central tubular part 8 within the threaded part 5. Furthermore, whilst the difference between the pressure at which the assembly sets and the pressure at which the assembly resets can be reduced to a low level of the order of 5 p.s.i. or less, this differential is adjustable by adjustment of the threaded part 5 in the main housing. This differential is increased by adjusting 5 to bring the aperture 14 closer to the O-seal 13 in the condition shown. Readjustment of 8 may be required after adjustment of 5.

Locking nuts 18 and 19 are provided for locking the aforementioned two adjustments.

In the event of the range not being required to be adjustable, the screw adjustment afforded by 5 may be omitted. Furthermore, it may be arranged that 11, if required, does not extend through an aperture in the upper end of the tubular part 8.

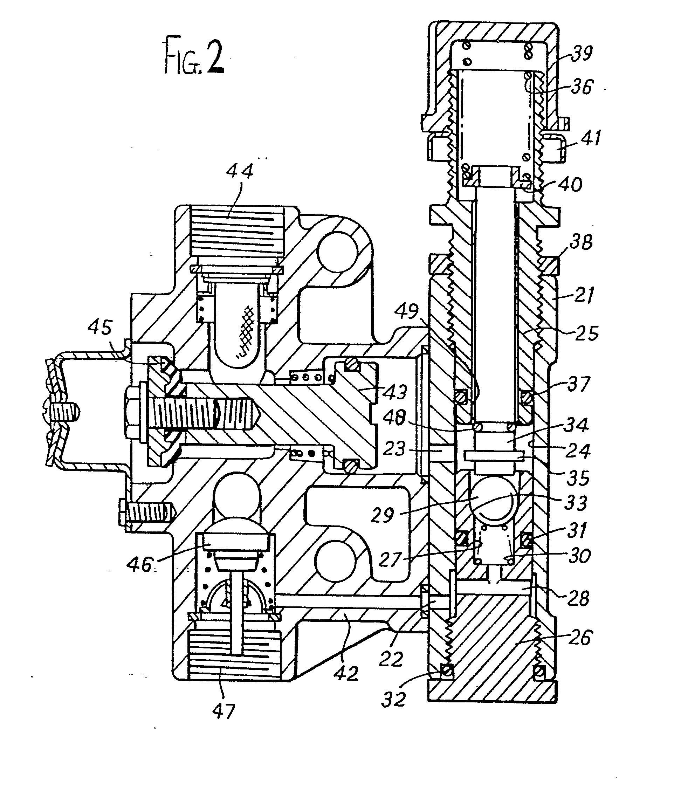

The present invention also provides in Fig. 2 a practical adaptation of the governor into a compressor unloader arrangement.

In Fig. 2 of the drawings, the main body 21 of the governor device has an input port 22 and an output port 23. The body 21 has a main bore 24 which is partially threaded at one end to receive a valve part 25 and at the other end to receive a further valve part 26. The valve part 26 is provided with a central bore 27 and a transverse bore 28 communicating therewith and input port 22. The bore 27 provides a housing for a spherical valve member 29 and a captive spring 30. O-seals 31 and 32 provide for isolation of the input port from the output port and atmosphere respectively. The valve device at the other end consists of a rod 34 with a stop-flange 35 close to the end of the rod which is spring-biassed by a spring 36 to normally rest against the spherical valve member 29. Inwardly of the stop-flange 35 an annular groove 37 of the rod 34 carries an O-seal 48 which, in the normal unoperated position, is clear of the aperture 49 via which the output port 23 communicates with atmosphere via the clearance between 25 and 34. The tubular body 25 is threadedly adjustable within the main body 21, a locking ring 38 being provided for fixing the adjustment. Furthermore, the thrust of the spring 36 is threadedly adjustable by means of an end cap 39 between the end of which and a thrust member 40, the spring is maintained in compression against the outer end of the rod 34. Again, a locking ring 41 enables locking of the adjustment of the compression of the spring 36.

Referring briefly to the unloader portion of the arrangement of Fig. 2, this is of generally known type and has a main body 42 within which a spring-biassed plunger 43 is provided one side of which communicates with the output port 23 and such that normally a port 44 for connection to the output of the compressor, is isolated from atmosphere by maintenance of a valve 45 in the closed position. A path which exists between the port 44 via a check valve 46 and the port 47, for connection to a reservoir being charged, is thus effective. In the event of the unloader being signalled by a pressure from port 23 indicating that the reservoir is fully charged the plunger 43 moves and the valve 45 is opened to connect the port 44 to atmosphere so that the compressor is unloaded and charging via the check valve 46 is interrupted.

Reverting now to the manner of operation of the governor device of Fig. 2 to produce signals at port 23 assume that the pressure in a reservoir connected at 47 commences at a pressure which is at atmosphere or appreciably below the desired level of pressure therein. The compressor operates to feed compressed air to the reservoir via the check valve 46 until due to the reservoir pressure acting beneath the spherical valve member 29, on an area contained by the seat 33 against which the valve member 29 is urged, the valve member 29 lifts from its seat against the thrust of the spring 36. On such unseating of the spherical valve member 29, from the seat 33, the valve member being a fairly close fit within the tubular body 26, presents substantially the full diameter of the ball to the pressure in the input port 22 and this results in a snap-action to urge the valve assembly and the rod 34 against the spring 36 so that O-ring 48 closes the central bore 49 of the member 25. The port 23 is thus isolated from atmosphere and a path is provided from the port 22 to apply reservoir fluid pressure via the port 23 to open the unloader valve 45.

With no loss of fluid pressure from the reservoir connected at the port 47, the pressure existing in the reservoir is sufficient to maintain the assembly in the position first described and this condition is stable regardless of slight variations or pressure fluctuations since like the seal 13 of Fig. 1 the seal 48 is able to move within the aperture 49 in the tubular member 25 without in so doing incurring resetting due to venting from the output port to atmosphere.

The predetermined reservoir pressure at which the assembly is deflected to produce an output signal at the port 23 to operate the unloader is adjusted by adjustment of the position of the cap 39. Whilst the difference between the pressure at which the assembly operates and the pressure at which the assembly resets is adjustable by adjustment of the tubular part 25 within the main body 21.

0010349

Claims:

1. A fluid pressure responsive governor device
including a body (1, 21) having a fluid pressure input
signal port (2, 22) and a fluid pressure output signal
port (3, 23), spring loaded valve means (11, 15;
29, 34) responsive to attainment of a predetermined
pressure at the input port to move to a condition in
which it opens a connection                 between the
input port and the output port and closes an output
port vent valve, said member thereafter being positively
held in said condition by virtue of an increase of
effective area exposed to said input port pressure,

    characterised in that means (13, 14;) are
provided whereby the spring loaded means is able to
execute movement due to a pressure change whilst
nevertheless maintaining closure of the vent valve.

2. A fluid pressure responsive governor device as
claimed in Claim 1 characterised in that said means is
provided by said valve having a tubular seat part and
a closure part (13;48) which is such as to  effect a
plugging action in the aperture (14;49) of said tubular
part.

3. A fluid pressure responsive governor device as claimed in Claim 1 or Claim 2 characterised in that adjustable
means (5;25) are included adjustment of which can determine
the differential between the pressure to set and the
pressure to reset the device.

- 2 -

0010349

4. A fluid pressure responsive governor device as claimed in Claim 2 or 3, characterised in that the adjustment determines the distance which the closure part is movable within the seat part whilst in seating engagement therewith.

*FIG. 1*

Fig. 2

0010349

- 2/2 -

European Patent Office

**EUROPEAN SEARCH REPORT**

Application number

EP 79 301 798.9

| | **DOCUMENTS CONSIDERED TO·BE RELEVANT** | | | CLASSIFICATION OF THE APPLICATION (Int. Cl.3) |
|---|---|---|---|---|
| Category | Citation of document with indication, where appropriate, of relevant passages | | Relevant to claim | |
| | US – A – 2 551 045 (A.L. PARKER) * column 3, lines 30 to 45 * -- | | 1 | G 05 D 7/01 B 60 T 17/04 F 16 K 15/02 |
| | US – A – 3 224 455 (G. ALFIERI) * entirely * -- | | 1 | |
| | DE – C – 1 157 447 (REGIE NATIONALE DES USINES RENAULT) * whole document * -- | | 1 | **TECHNICAL FIELDS SEARCHED (Int.Cl.3)** |
| | DE – B2 – 2 233 210 (R. BOSCH GMBH) * claims * -- | | 1,3 | B 60 T 17/00 F 16 K 15/00 G 05 D 7/00 |
| A | DE – B – 1 192 067 (R. BOSCH GMBH) * whole document * ---- | | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 11-01-1980 | BEYER |

EPO Form 1503.1  06.78